# EUROPÄISCHE PATENTSCHRIFT

(11) **EP 1 917 121 B1**
(45) Veröffentlichungstag und Bekanntmachung des Hinweises auf die Patenterteilung: **30.12.2009**
(21) Anmeldenummer: 06776516.4
(22) Anmeldetag: 31.07.2006
(51) Int. Cl.: B24B 7/24, B24B 13/015

(54) **VERFAHREN ZUM NACHBEARBEITEN VON GLASSCHEIBEN**
METHOD FOR SUBSEQUENTLY TREATING GLASS PANES
PROCEDE D'USINAGE ULTERIEUR DE PLAQUES DE VERRE

(30) Priorität: 02.08.2005 DE 102005036776; 02.08.2005 DE 102005036779
(43) Veröffentlichungstag der Anmeldung: 07.05.2008
(73) Patentinhaber: Schott AG, 55122 Mainz (DE)
(72) Erfinder: PLAPPER, Volker, 55232 Alzey (DE); OTTERMANN, Clemens, 65785 Hattersheim (DE); KÖHR, Thomas, 55122 Mainz (DE); SPEIT, Burkhardt, 55126 Mainz (DE); CLAUSS, Michael, 65719 Hofheim (DE)
(74) Vertreter: Herden, Andreas F.
(86) Internationale Anmeldenummer: PCT/EP2006/007551
(87) Internationale Veröffentlichungsnummer: WO 2007/014732

(56) Entgegenhaltungen:
- EP-A- 1 333 313
- US-A- 4 833 832

## Beschreibung

Die Erfindung betrifft allgemein das Nachbearbeiten von Glasscheiben, insbesondere ein Verfahren zur mechanischen Nachbearbeitung.

Vorrichtungen zur Nachbehandlung von Glasscheiben sind unter anderem aus der DE 38 39 150 C1 der JP 2004 167634 A, der DE 411 201 A, der US 4,833,832 A, der JP 2004 195602 A und der US 2005/0020193 A1 bekannt. Die DE 38 39 150 C1 beschreibt dabei eine Maschine zum Bearbeiten von Flachglas, welche eine auf einem Spanntisch hin- und herfahrbare Brücke mit einer Längsführung für mehrere Schlitten vorgesehen ist. Die Schlitten dienen zur Aufnahme von Werkzeug- und/oder Werkstückträgern, die leicht auswechselbare Glasbearbeitungsmodule bilden.

Aus der JP 2004 167634 A ist eine Poliervorrichtung bekannt, bei welcher das Substrat mittels einer Andruckplatte gegen einen Schleifer gedrückt wird. Die Andruckplatte ist zur Kompensation von Temperaturunterschieden konkav geformt. Der Schleifer weist einen Durchmesser auf, der größer ist, als das zu bearbeitende Substrat.

Die DE 411 201 A beschreibt eine Vorrichtung zum Grobschleifen, Feinschleifen und Polieren von Spiegelscheiben. Dazu werden mehrere Gruppen von Schleifscheiben verwendet, wobei jede Gruppe in einem Zwischenträger gelagert ist, der an einem Hauptträger sitzt und um eine senkrecht zur Arbeitsfläche liegende Achse drehbar ist. Um die Ausbildung von Strassen beim Schleifen zu vermeiden, sind die Achsen der einzelnen Schleifscheiben auf einer Spirallinie um die Achse des jeweiligen Zwischenträgers angeordnet.

Die US 4,833,832 A beschreibt ein Verfahren zum Polieren von Glasscheiben, bei welchem das Glas mit einer Vielzahl von Diamant-Schleifscheiben bearbeitet wird, die an einem horizontalen Gerüst befestigt sind. Am Gerüst können die rotierenden Schleifscheiben über die obere Fläche des horizontal gelagerten Glases geführt werden. Die Diamantscheiben werden auf eine gemeinsame Höhe eingestellt, die etwas niedriger ist, als die Höhe der Glasoberfläche und dann über die Glasscheibe geführt, so daß eine Lage des Glases von der Oberfläche entfernt wird.

Die JP 2004 195602 A beschreibt ein Verfahren zum Polieren von Glasscheiben für Farbfilter von LCD-Anzeigen mit Größen bis 900mm x 1100mm. Dabei wird eine vierkantige Polierplatte eingesetzt, deren Länge größer als die Breite der Glasscheibe ist. Das Substrat wird exzentrisch rotiert, während die Polierplatte über das Glassubstrat bewegt wird und senkrecht zu deren Vorschubrichtung schwingt.

Aus der US 2005/0020193 A1 ist es weiterhin bekannt, die Kanten von Glassubstraten mit einem rotiererenden Riemen abzurunden.

Für die Fertigung von TFT-Displays werden Glassubstrate verwendet, an die sehr hohe Anforderungen bezüglich Oberflächenqualität gestellt werden. Die auf die Substrate aufgebrachten Halbleiterschichten sind überaus empfindlich auf Oberflächendefekte wie beispielsweise Kratzer oder Oberflächendefekte. Auch werden immer großflächigere Substrate gefordert, um die Produktionskosten durch höhere Integration und Produktivität (scaling factor) bei der Herstellung der TFT-Displays zu senken.

Die EP 1333 313 A1 beschreibt ein Verfahren zur Herstellung großflächiger Substrate, etwa für TFT-Displays, die ein Verhältnis von Ebenheit zu diagonaler Länge von höchstens 6*10⁻⁶ aufweisen. Es wird von Substraten ausgegangen, die eine Ebenheit von größer 30 Mikrometern aufweisen. Die Einebnung geschieht durch Schleifen, Läppen oder Polieren.

Um Substrate für TFT-Displays zu fertigen, wird beispielsweise das Overflow-fusion-Verfahren (ein Downdraw-Verfahren) eingesetzt. Die mit diesem Prozess hergestellten Gläser haben zwar eine feuerpolierte Oberfläche, allerdings zeigen sie auch typischerweise nachteilige Eigenspannungen der Gläser.

Hinsichtlich der Spannungen im Glas liefert Floatglas an sich im allgemeinen bessere Ergebnisse und kann auch kostengünstiger im Schmelz- und Formprozess hergestellt werden. Allerdings stören hier die für Display-Anwendungen zu vermeidenen Floatbad-Oberflächenverunreinigungen, insbesondere das auf der Oberfläche verbleibende Zinnoxid.

Der Erfindung liegt daher die Aufgabe zugrunde, die oben genannten Nachteile bei der Nachbearbeitung von Glassubstraten zu vermeiden oder zumindest abzumildern. Diese Aufgabe wird bereits in höchst überraschend einfacher Weise durch den Gegenstand des unabhängigen Ansprüchs 1 gelöst. Vorteilhafte Ausgestaltungen und Weiterbildungen sind Gegenstand der Unteransprüche.

Demgemäss sieht die Erfindung ein Verfahren zur Nachbehandlung von Flachglas-Substraten, insbesondere von Flachglas-Substraten für die Flachbildschirm-Fertigung vor, wobei das Substrat eine Fläche von zumindest 3,2 m², vorzugsweise eine Fläche von zumindest 3,6 m² aufweist, und wobei das Substrat auf einer Fläche von zumindest 3,2 m², vorzugsweise einer Fläche von zumindest 3,6 m² durch

Materialabtrag von wenigstens einer Seite nachbehandelt wird. In bevorzugter Ausgestaltung werden Substrate mit einer Breite von zumindest 1,7, bevorzugt zumindest 1,8 m und eine Länge von zumindest 1,9, bevorzugt zumindest 2 Metern eingesetzt und auf einer Fläche mit einer Breite von zumindest 1,7, vorzugsweise zumindest 1,8 m und eine Länge von zumindest 1,9, vorzugsweise zumindest 2 Metern durch Materialabtrag von wenigstens einer Seite nachbehandelt.

Die zur Bearbeitung solch großer Substrate verwendeten Abtragswerkzeuge weisen vorzugsweise verglichen mit dem zu bearbeitenden Substrat wesentlich kleinere Werkzeugflächen, wie beispielsweise Schleifflächen auf. Dennoch sind Fehler bei der Bearbeitung, wie etwa das Einfügen von Wellen durch den Materialabtrag zu vermeiden, wenn Substrate von hoher Qualität für die TFT-Fertigung bereitgestellt werden sollen.

Bei derartigen sehr großen Substraten waren bisher sowohl die Anlagentechnik als auch die Prozesse für die erforderlichen Genauigkeiten nicht in genügender Qualität verfügbar. Es hat sich aber gezeigt, dass eine derart großflächige materialabtragende Nachbehandlung hinreichend schnell und kostengünstig durchführbar ist, um auch Floatglas-Substrate für die Flachbildschirm-Fertigung, wie etwa Active Matrix TFT-Anzeigen oder Plasmabildschirmen einsetzen zu können.

Der Materialabtrag umfasst erfindungsgemäß das Polieren des Flachglas-Substrats. Es können aber auch andere abrasive, chemische oder elektrochemische Verfahren des Materialabtrags, insbesondere auch eine chemische oder chemisch mechanische Politur alternativ oder vorzugsweise auch ergänzend eingesetzt werden.

Die verwendeten Flachglas-Substrate haben vorzugsweise eine Dicke von höchstens 1,2 mm, bevorzugt höchstens 0,8 mm, insbesondere höchstens 0,7 mm.

Besonders mit derartig dünnen Substraten kann das Flachglas-Substrat während des Materialabtrags auch gebogen werden. Übliche Polierverfahren verwenden eine flache, möglichst vollflächige Lagerung. Allerdings kann durch eine Verbiegung des Substrats, wie sie gemäß dieser Weiterbildung vorgesehen ist, die von den Abtragswerkzeugen erfasste Fläche eingestellt werden.

Es hat sich weiterhin bereits als ausreichend erwiesen, durch die Nachbehandlung Material mit einer Dicke von im Mittel höchstens 20 Mikrometern, bevorzugt im Mittel höchstens 15 Mikrometern, besonders bevorzugt im Mittel höchstens 10 Mikrometern vom Substrat abzutragen. Gute Polierergebnisse konnten überraschend auf wirtschaftliche Weise insbesondere erzielt werden, wenn durch die Nachbehandlung zumindest Material mit einer Dicke von 0.5 Mikrometern, bevorzugt 1 Mikrometern, besonders bevorzugt 2 Mikrometern vom Substrat abgetragen wird, um eine insbesondere für die Fertigung von TFT-Displays geeignete Oberfläche zu erhalten.

Auch eine erfindungsgemäße Reduzierung der Welligkeit ("Waviness") des Flachglas-Substrat auf der nachbehandelten Seite auf kleiner 100 Nanometern, bevorzugt kleiner 50 Nanometern erweist sich bei den sehr großflächigen Substraten überraschend als hinreichend kostengünstig. Es hat sich weiterhin gezeigt, daß Flachglas-Substrate mit einer Welligkeit von bis zu 200 Nanometern in wirtschaftlicher Weise erfindungsgemäß nachbehandelt werden. Der Waviness, wie sie mit der erfindungsgemäßen Nachbehandlung deutlich reduziert werden kann, werden im Sinne der Erfindung insbesondere Gestaltabweichungen zweiter bis vierter Ordnung gemäß DIN 4760 zugerechnet. Meßmethoden und Definitionen der Waviness sind auch in der Norm SEMI D15-1296 (1996) angegeben, deren Inhalt diesbezüglich vollumfänglich auch zum Gegenstand der vorliegenden Erfindung gemacht wird.

Als Waviness wird insbesondere eine Welligkeit des Glases bezeichnet, bei welcher die Wellen eine laterale Ausdehnung in zumindest einer Richtung mit Dimensionen im Bereich von etwa 0,8 bis 8 Millimetern aufweisen. Welligkeiten in diesem Bereich sind optisch wahrnehmbar und können den visuellen Eindruck verschlechtern. Die Welligkeit bezeichnet dabei die mittlere Maximalhöhe der einzelnen Wellen mit dieser lateralen Abmessung im Bereich von etwa 0,8 bis 8 Millimetern.

Die erfindungsgemäße Nachbehandlung kann außerdem weitergebildet werden, indem vor oder während des Materialabtrags eine Oberflächen- und/oder Volumenanalyse des Substrats durchgeführt wird. Dann ist es auch möglich, mittels geeigneter Werkzeuge insbesondere automatisch, beziehungsweise mäschinengesteuert einen zusätzlichen lokalen Materialabtrag in Abhängigkeit einer Oberflächen- und/oder Volumenanalyse, insbesondere lokal an erfaßten Oberflächenfehlern durchzuführen. Auf diese Weise können etwa Schwankungen in der Qualität des Rohsubstrates durch einen angepassten Polierprozess ausgeglichen und so der Ausschuß erheblich reduziert werden. Auch kann sehr vorteilhaft eine Welligkeit des Flachglas-Substrats erfaßt und durch lokalen Materialabtrag zumindest teilweise ausgeglichen werden.

Das Verfahren kann beispielsweise dann auch zum Ausgleich der Welligkeit von Overflow-Downdraw-Substraten eingesetzt werden.

Die Erfindung ist nicht nur auf die Behandlung diskreter Substrate beschränkt. Vorteilhaft kann vielmehr auch ein Glasband aus einem Glasherstellungsprozess kontinuierlich nachbehandelt werden. Auch bei der Weiterverarbeitung einzelner Flachglas-Substrate ist gemäß einer Weiterbildung vorgesehen, daß die einzelne Glassubstrate direkt nacheinander in einem durchlaufenden Abtragsprozeß bearbeitet werden. Beispielsweise können die Glassubstrate hintereinander im wesentlichen lückenlos eine erfindungsgemäße Vorrichtung durchlaufen, während die Werkzeuge für den Materialabtrag durchgehend in Betrieb bleiben.

Gemäß einer weiteren Ausführungsform der Erfindung wird das Flachglas-Substrat während der Nachbehandlung auf einer Auflage mit einer Glaskeramik-Platte gelagert. Bisher wurden dazu im allgemeinen Granitplatten eingesetzt. Hierbei entsteht allerdings das Problem, dass Granit porös ist und sich bei der Nachbehandlung mit Wasser voll saugen kann, was zu einer Deformation der Auflagefläche in ungenügendem Maße führen kann. Auch können sich Granitplatten aufgrund ihres Wärmeausdehnungskoeffizienten insbesondere bei einer inhomogenen Temperaturverteilung verformen. Demgegenüber nimmt eine Glaskeramik praktisch kein Wasser auf. Ein ganz besonderer Vorteil ist außerdem der nahezu verschwindende Temperaturausdehungskoeffizient dieses Materials, durch welchen temperaturbedingte Verformungen praktisch nicht mehr auftreten. Mit einer Auflage oder Unterlage gemäß dieser Ausführungsform der Erfindung kann daher eine auch unter verschiedensten Bedingungen äußerst plane Oberfläche zur Lagerung des Flachglas-Substrats bereitgestellt werden. Dieser Verfahrensanspruch kann darüber hinaus auch bei kleineren Substratgrößen sinnvoll eingesetzt werden. Um die Kosten für eine derartige Auflage zu reduzieren, kann die Glaskeramik-Platte auch auf einer weiteren Unterlage befestigt werden.

Um eine Verschiebung des Substrats auf der Auflage während der Nachbehandlung zu vermeiden, kann ein Teil der Auflage mit einer Haltefunktion ausgestattet sein. Besonders bevorzugt wird dazu das Flachglas-Substrat auf einem Teil der Auflage festgesaugt. Insbesondere bietet es sich an, wenn die Matte mit festsaugenden Strukturen ausgestattet ist. Derartige Strukturen können beispielsweise zur Oberfläche offene, verformbare Poren oder auch Saugnäpfe sein. Eine weitere Möglichkeit ist, daß das Flachglas-Substrat durch einen an in der Auflage vorhandene Kanäle angelegten Unterdruck festgesaugt wird. Alternativ oder zusätzlich kann die Auflage auch porös sein, so daß Gas durch die Auflage hindurch strömen kann. Gemäß dieser Weiterbildung der Erfindung kann das Flachglas-Substrat dann auf der porösen Auflage, an welche ein Unterdruck angelegt wird festgesaugt werden.

Viele Abtragsverfahren, wie mechanische Politur oder auch chemischer Abtrag, sind in hohem Maße temperaturabhängig. Demgemäss ist es von Vorteil, wenn die Temperatur des Flachglas-Substrats während des Abtrags geregelt wird.

Es hat sich gezeigt, dass sich die hohen Anforderungen für Glassubstrate für die TFT-Display-Herstellung besonders dann erfüllen lassen, wenn die Temperatur des Flachglas-Substrats zumindest entlang des Abtragsbereichs auf höchstens ±5 °C, bevorzugt ±2,5 °C, besonders bevorzugt höchstens ±1,5 °C eingestellt wird.

Eine besonders bevorzugte Ausführungsform der Erfindung sieht vor, eine Poliereinrichtung mit mehreren nebeneinander angeordneten, insbesondere unabhängig voneinander einstellbaren oszillierenden Werkzeugen einzusetzen. Die Werkzeuge können dabei unter anderem vorteilhaft jeweils bezüglich wenigstens eines der Parameter Anpressdruck, Drehzahl, Amplitude der Oszillation und Temperatur einstellbar sein.

Die oszillierende Bewegung kann in einer oder auch in zwei Richtungen entlang der Oberfläche des zu polierenden Flachglas-Substrats erfolgen. Bevorzugt werden dabei Oscar-Type-Polierwerkzeuge. Bei derartigen Werkzeugen bewegt sich der Polierkopf in einer oder zwei gekoppelten Exzenterbewegungen über das Glas. Das Polierwerkzeug kann auch zusätzlich rotieren.

Beispielsweise kann ein rotierendes Polierwerkzeug auf einem Abschnitt einer Kreis- oder Ellipsenbahn pendelnd oder in Form einer Acht (8) über das Glas geführt werden. Auf diese Weise können kleinere Werkzeuge eingesetzt werden mit gleichmäßigerem Prozessverhalten hinsichtlich Materialabtrag und Oberflächengüte. Im Unterschied dazu bewegen sich bei einem nur rotierenden Polierwerkzeug die randnahen Bereiche schneller als achsennahe Bereiche. Auch bei einer Planetenbewegung, wie sie etwa aus der JP 11170150 A2 oder der JP 7178655 A2 bekannt ist, ergeben sich aufgrund der komplexen, zykloiden Bewegungsbahnen ungleichmäßige Abtragsverhalten. Es hat sich aber gezeigt, dass durch die kleinen Werkzeuge mit Exzenterbewegung eines Oscar-Type-Werkzeugs eine bessere Oberfläche erreicht werden kann gegenüber nur rotierenden Werkzeugen.

Mittels der Oscar-Typ-Kinematik kann insbesondere eine vorteilhafte Ausführung der Poliermaschine erreicht werden, die die Politur eines Substrates mit einem kontinuierlichen Vorschub ermöglicht, derart, dass die einzelnen Substrate direkt nacheinander poliert werden können und somit eine kontinuierliche Verkettung der Bearbeitung realisiert wird.

Eine weitere Maßnahme, die bei den großflächigen Substraten besonders von Vorteil ist, besteht darin, dass mehrere Polierwerkzeuge Material abtragen, wobei durch die Polierteller ausgeübten Scherkräfte entlang der Oberfläche des Substrats sowie auch Drehmomente durch jeweils unterschiedlichen Drehsinn von Poliertellern der Werkzeuge ausgeglichen werden.

Eine besonders vorteilhafte Ausprägung des Polierprozesses mit der oben beschriebenen Vorrichtung erreicht man, wenn man den kontinuierlichen Bewegungen des Werkzeuges stochastische Bewegungen überlagert, vorzugsweise mit kleiner Amplitude, bevorzugt in ungerichteter Bewegung.

Bei der Herstellung von Flachglas-Substraten für die Herstellung von TFT-Displays ist es insbesondere wünschenswert, eine durchgängig hohe Oberflächenqualität bereitzustellen, die auch die fehlerfreie Fertigung von Dünnschichttransistoren bis zum Rand des Substrats hin ermöglicht. Um dies zu erreichen, haben sich die im folgenden beschriebenen Ausgestaltungen der Erfindung als besonders geeignet erwiesen.

Ein besonders gleichmäßiger Abtrag über die große Fläche des Substrats hinweg wird dadurch erreicht, indem das Substrat mit zumindest einem Abtragswerkzeug, vorzugsweise einem Polierkopf, mit einer entsprechenden Einrichtung, beziehungsweise einem Bewegungsmechanismus zur Durchführung dieser Kinematik in parallelen geradlinigen, Bahnen über die gesamte Länge oder Breite des Substrats überfahren wird, wobei die Bahnen überlappen. Dabei kann das Substrat gegenüber dem wenigstens einen Abtragswerkzeug, insbesondere einem Polierkopf parallel entlang einer Vorschubrichtung bewegt werden, wobei das Abtragswerkzeug mittels des Bewegungsmechanismus zeilenförmig quer zur Vorschubrichtung über das Substrat hinweg bewegt wird. Die Bewegung entlang der Vorschubrichtung ist dabei insbesondere als Relativbewegung zu verstehen. So kann einerseits das Substrat entlang der Vorschubrichtung bewegt werden, andererseits ist es auch möglich, das Abtragswerkzeug entlang einer Vorschubrichtung zu bewegen. Denkbar ist ferner auch eine kombinierte Bewegung des Abtragswerkzeugs und des Substrats, so daß eine Relativbewegung entlang einer Vorschubrichtung erhalten wird. Um den Bearbeitungsprozeß zu beschleunigen kann insbesondere das Substrat mit mehreren Abtragswerkzeugen, die das Substrat in parallelen Bahnen überfahren, gleichzeitig behandelt werden. Es ist dabei nicht zwingend erforderlich, daß die Bahnen der gleichzeitig über das Substrat geführten Werkzeuge bereits überlappen. Ebenso wie bei einem einzelnen Werkzeug kann der Überlapp auch bei einem nachfolgenden Überfahren der Werkzeuge mit vorherigen Bahnen erfolgen.

Es hat sich als günstig für einen gleichmäßigen Abtrag erwiesen, wenn dabei die Bahnen um mehr als die Hälfte ihrer Breite überlappen. Verbleibende Ungleichmäßigkeiten im Abtrag an den Rändern der Bahnen können weiterhin durch Aufprägen einer Exzenterbewegung oder allgemein einer oszillierenden Bewegung mit einer Komponente quer zur Bahn ausgeglichen werden, wobei die Amplitude vorzugsweise nur klein, insbesondere kleiner als die Breite der Bahn, besonders bevorzugt kleiner als ein Drittel der Breite der Bahn bleibt. Als Breite der Bahn wird hier diejenige Breite verstanden, die ein nicht zusätzlich oszillierendes Abtragswerkzeug beim Überfahren des Substrats erzeugen würde.

Die Bewegung des Abtragswerkzeugs kann gleichzeitig zur Vorschubbewegung entlang der Vorschubrichtung erfolgen. Insbesondere bevorzugt ist allerdings eine intermittierende Bewegung, bei welcher das Substrat gegenüber den Abtragswerkzeugen während der Bewegung der Abtragswerkzeuge quer zur Vorschubrichtung festgehalten wird. Haben das oder die Werkzeuge das Substrat überfahren, wird das Substrat in vorschubrichtung bewegt, so daß das Werkzeug nachfolgened die nächst Bahn überfahren kann. Die Bewegung der Abtragswerkzeuge quer zur Vorschubrichtung erfolgt dann vorzugsweise senkrecht zur Vorschubrichtung. Besonders zweckmäßig ist insbesondere ein Überfahren des Substrats entlang eines mäanderförmigen Weges. Dies bedeutet, daß das Werkzeug nacheinander überstrichenen Bahnen in entgegegesetzten Richtungen überfährt.

Die Ausführungsform der Erfindung mit einer Überstreichung des Substrats in geradlinigen Bahnen über das gesamte Längen- oder Breitenmaß hat sich hinsichtlich der Gleichmäßigkeit des Abtrags insbesondere im Randbereich gegenüber einer Oscar-Type-Anordnung als überlegen erwiesen.

Um einen gleichmäßigen Abtrag bis zum Rand des Substrats zu erreichen, ist es besonders von Vorteil, wenn bei einem rotierenden Abtragswerkzeug das Werkzeug beim Überfahren des Substrats zumindest bis zu dessen Rotationsachse über den Rand des Substrats hinaus bewegt wird. Vorzugsweise wird das Abtragswerkzeug mit über 3/4 des Werkzeugdurchmessers über den Rand des Substrats hinaus gefahren. Dies ermöglicht zusätzlich auch, die Nebenzeiten zu nutzen, um das Abtragswerkzeug mittels einer geeigneten Einrichtung zu konditionieren, beispielsweise zu bürsten oder abzurichten. Als Nebenzeit wird dabei im Sinne der Erfindung allgemein die Zeit verstanden, während der das Abtragswerkzeug im Verlauf des Abtragsprozesses teilweise oder vollständig nicht in Kontakt mit dem zu bearbeitenden Substrat steht. Demgemäß Kann eine Konditioniereinrichtung vorgesehen sein, welche das Abtragswerkzeug bürstet und/oder abrichtet während das Abtragswerkzeug im Verlauf des Abtragsvorgangs zwischenzeitlich zumindest mit dessen Dreh- oder Mittenachse, vorzugsweise gänzlich über den Rand des Glassubstrats hinaus gefahren ist.

Allgemein ist es auch bevorzugt, ein Abtragswerkzeug einzusetzen, das frei schwenkbar um zumindest eine Achse, insbesondere um eine Achse parallel zur Substratoberfläche gelagert ist, so daß sich beim Andrücken des Werkzeugs auf die Substratoberfläche der Anpressdruck besser über die Fläche des Abtragswerkzeugs verteilen kann. Besonders bevorzugt wird das Abtragswerkzeug dabei kardanisch gelagert, so daß es um zwei Schwenkachsen kippbar ist. Hierbei ergibt sich aber dann das Problem, daß der Anpressdruck beim Überfahren des Randes des Substrats sogar sehr ungleichmäßig werden kann, da das Werkzeug dazu tendiert um die Schwenkachse zu kippen. Dies hätte zur Folge, daß in sehr randnahen Bereichen, beziehungsweise direkt an der Kante ein starker Abtrag und in einem Bereich etwa um den Werkzeugradius vom Rand entfernt ein schwächerer Abtrag erfolgt. Es hat sich aber überraschend gezeigt, daß dieses Problem dadurch beseitigt werden kann, indem die betreffende Schwenkachse mittels einer geeigneten Einrichtung beim Überfahren des Randes des Substrats arretiert wird. Wird der Rand des Substrats überfahren, ist es zur Erzielung eines gleichmäßigen Abtrags auch besonders vorteilhaft, mittels einer geeigneten Steuereinrichtung Abtragsparameter des Werkzeugs während des Überfahrens anzupassen. Insbesondere kann der Anpressdruck so angepasst werden, daß der Flächendruck im wesentlichen konstant bleibt. Unter einem im wesentlichen konstanten Flächendruck ist dabei vorzugsweise ein Flächendruck zu verstehen, der vom Flächendruck bei vollständig auf dem Substrat aufliegendem Werkzeug höchstens um 20% abweicht. Alternativ oder zusätzlich zum Anhpressdruck können aber auch andere Parameter angepasst werden. Beispielsweise ist auch eine Anpassung der Rotationsgeschwindigkeit eines Poliertellers möglich.

Das Verfahren mit einer Überstreichung des Substrats in parallelen überlappenden Bahnen weist noch einen weiteren Vorteil auf. Es hat sich gezeigt, daß sich Wellen, insbesondere solche, die aufgrund ihrer Abmessungen der Waviness oder Feinwelligkeit zuzurechnen sind, mit einer Längsrichtung quer zur Bahnrichtung schneller einebnen lassen, als derartige Wellen mit Längsrichtung entlang der Bahnen. Dies kann vorteilhaft ausgenutzt werden, um schneller zu einer für die Fertigung von TFT-Transistoren für qualitativ hochwertige Displays geeigneten Substratoberfläche zu gelangen. Dazu wird ein Substrat mit einer Feinwelligkeit oder Waviness nachbehandelt, wobei die Bahnen quer zur Vorzugsrichtung der Längsrichtung der Feinwellen laufen, vorzugsweise in einem Winkel von zumindest 60° zur Vorzugsrichtung der Längsrichtung der Feinwellen. Beispielsweise zeigt sich eine deutliche Vorzugsrichtung der Längsrichtung von Feinwellen bei einem Floatglas-Substrat in Ziehrichtung, bei einem kontinuierlichen Floatglas-Band also in Längsrichtung des Bandes.

Besonders für den Einsatz von Floatglas-Substraten kann das erfindungsgemäße Verfahren auch für die Entfernung von Zinnoxid von der Oberfläche des Flachglas-Substrats durch den Materialabtrag eingesetzt werden.

Zur Erzielung geeigneter Oberflächen für die Herstellung von TFT-Displays hat es sich weiterhin als besonders vorteilhaft erwiesen, wenn die Substratoberfläche während und bis zu einer nach dem Materialabtrag erfolgenden Reinigung feucht gehalten wird. Dabei bezieht sich feucht halten nicht nur auf das Vorhandensein von Wasser; vielmehr kann die Oberfläche, je nach Art des Abtragsprozesses auch mit anderen Lösungsmitteln feucht gehalten werden. Diese vorteilhafte Ausgestaltung der Erfindung verhindert, dass sich Rückstände auf der Oberfläche festsetzen können, die anderenfalls nur schwer zu entfernen sind.

Im folgenden wird die Erfindung anhand von Ausführungsbeispielen und unter Bezugnahme auf die Zeichnungen näher erläutert, wobei gleiche und ähnliche Elemente mit gleichen Bezugszeichen versehen sind und die Merkmale verschiedener Ausführungsbeispiele miteinander kombiniert werden können.

### Es zeigen:

- Fig. 1: eine schematische Ansicht einer Vorrichtung zur Durchführung des erfindungsgemäßen Verfahrens,
- Fig. 2: Weiterbildungen des in Fig. 1 gezeigten Beispiels,
- Fig. 3: eine Anordnung zum Polieren des Flachglas-Substrats,
- Fig. 4: ein mit Halbleiterschaltungen für die Fertigung von TFT-Anzeigen beschichtetes Substrat,
- Fig. 5: eine schematische Aufsicht auf ein weiteres Ausführungsbeispiel einer Vorrichtung mit mehreren Oscar-Type-Polierwerkzeugen,

- Fig. 6: eine Ausführungsform einer Auflage für ein Flachglas-Substrat,
- Fig. 7: eine weitere Anordnung zum Polieren von Flachglas,
- Fig 8: eine Weiterbildung der in Fig. 7 gezeigten Anordnung mit mehreren Polierköpfen,
- Fig. 9: eine Simulation des Abtrags mittels einer Oscar-Type-Anordnung von Polierköpfen,
- Fig. 10: eine Simulation des Abtrags mittels einer wie in Fig. 7 oder 8 gezeigten Anordnung, und
- Fig. 11: eine Illustration der Verkippung eines Polierkopfes beim Überfahren des Randes eines Substrats.

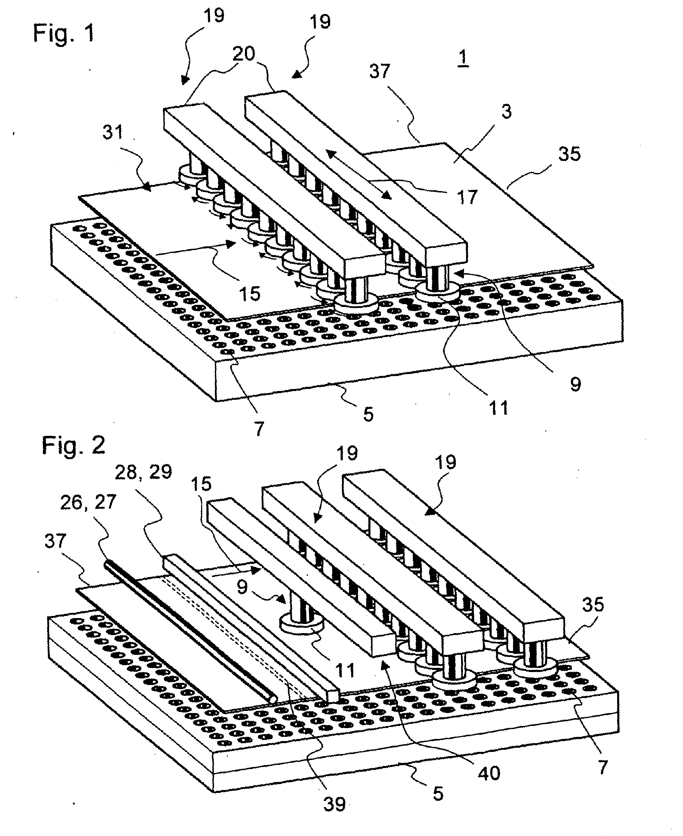

In Fig. 1 ist eine schematische Ansicht eines ersten Ausführungsbeispiels einer Vorrichtung 1 zur Nachbehandlung eines Flachglas-Substrats 3 mit dem erfindungsgemäßen Verfahren dargestellt. Das Flachglas-Substrat 3 ist insbesondere für die Flachbildschirm-Fertigung geeignet und weist Kanten 35, 37 mit einer Kantenlänge von 1,8 Meter, beziehungsweise zumindest 2 Metern auf. Das Substrat 3 wird erfindungsgemäß auf einer Fläche von zumindest 1,8 Meter x 2 Metern einer Seite 31 durch Materialabtrag nachbehandelt. Das Flachglas-Substrat 3 weist außerdem eine Dicke von höchstens 1,2 mm, bevorzugt höchstens 0,8 mm, insbesondere höchstens 0,7 mm auf. Weiterhin kann das Flachglas-Substrat 3, welches bevorzugt ein Floatglas-Substrat ist, auch ein kontinuierliches Glasband sein, welches im Anschluss an den Glasherstellungsprozess kontinuierlich nachbehandelt wird. Durch die erfindungsgemäße Nachbehandlung wird Material mit einer Dicke von im Mittel höchstens 20 Mikrometern, bevorzugt im Mittel höchstens 15 Mikrometern, besonders bevorzugt im Mittel höchstens 10 Mikrometern vom Substrat abzutragen. Die Untergrenzen für gute Polierergebnisse liegen bei einem Materialabtrag von zumindest einer Dicke von 0.5 Mikrometern, bevorzugt 1 Mikrometern, besonders bevorzugt 2 Mikrometern im Mittel.

Insbesondere wird bei dem in Fig. 1 gezeichnete Materialabtrag durch Polieren mittels der an einer Halterung 20 geführten Polierwerkzeuge 9 einer Polierbank 19 vorgenommen. Der Materialabtrag kann neben Polieren auch andere abrasive Verfahren, chemischen oder elektrochemischen Materialabtrag umfassen. Insbesondere ist auch daran gedacht, eine chemisch mechanische Politur einzusetzen. Der Materialabtrag dient neben der Beseitigung von Oberflächenfehlern, wie Kratzern oder leichten Wellen unter anderem auch dazu, bei einem Floatglas-Substrat Verunreinigungen, insbesondere zinnhaltige Verunreinigungen, wie etwa Zinnoxid, von der Oberfläche zu entfernen.

Während des Poliervorgangs wird das Substrat 3 entlang einer Vorschubrichtung 15 bewegt, welche bei dem in Fig. 1 gezeigten Beispiel entlang der Längskante 37 des Substrats 3 verläuft.

Bevorzugt werden mehrere Bänke von Polierwerkzeugen 9 entlang der Vorschubrichtung 15 eingesetzt. In Fig. 1 sind der Einfachheit halber nur zwei Bänke 19 dargestellt. Der Drehsinn der Polierteller 11 ist jeweils gegenläufig zu benachbarten Poliertellern. Durch diesen jeweils unterschiedlichen Drehsinn werden die unterschiedlich orientierten Drehmomente entlang der Oberfläche ausgeglichen. Diese entlang der Oberfläche wirkenden Kräfte und Momente könnten sich sonst aufaddieren, so dass sich die sehr großflächigen Substrate kaum halten ließen oder sogar brechen können. Um dies gänzlich zu vermeiden, ist eine geradzahlige Anzahl an Werkzeugen vorteilhaft.

Die mehreren Bänke können die Seite 31 auch schrittweise mit mehreren unterschiedlichen, insbesondere aufeinander aufbauenden materialabtragenden Polierschritten, und besonders bevorzugt mit immer feineren Poliermitteln nachbehandeln.

Werden mehrere Polierbänke für unterschiedliche Polierstufen gleichzeitig eingesetzt, das Substrat also gleichzeitig in mehreren aufeinander aufbauenden materialabtragenden Schritten behandelt, so sind zwischen den Polierbänken außerdem vorzugsweise noch Reinigungseinrichtungen vorhanden, welche Poliermittel der jeweils vorangegangenen Polierstufe entfernen. Auf diese Weise wird verhindert, dass zu grobes Poliermittel das Ergebnis eines nachfolgenden feineren Polierschrittes beeinträchtigt.

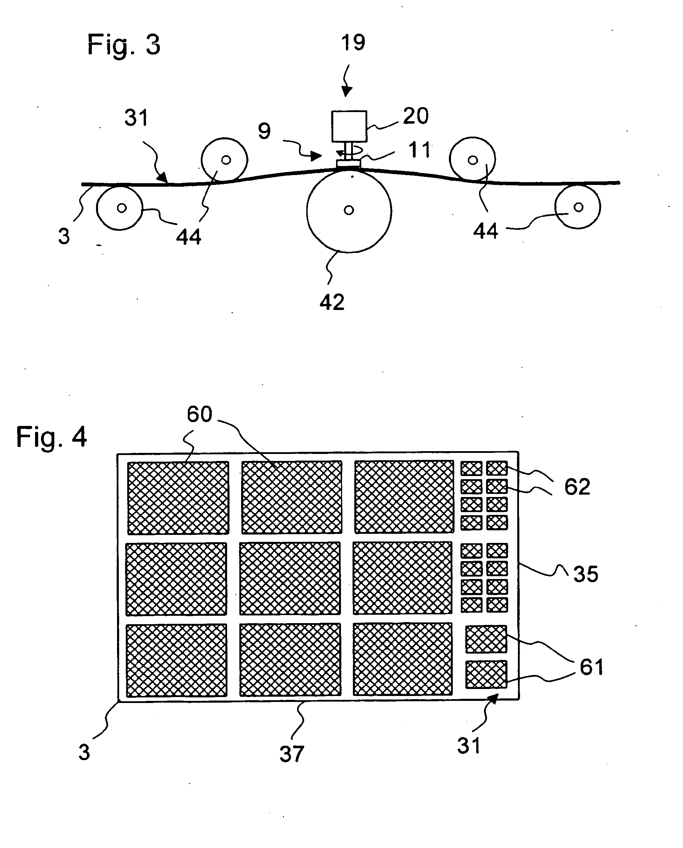

In der Unterlage 5 sind außerdem Kanäle 7 eingefügt, welche sich durch die Unterlage hindurch erstrecken und in die Auflagefläche für das Flachglas-Substrat münden. Über die Kanäle wird ein Unterdruck angelegt, mit welchem das Flachglas-Sunstrat 3 an die Unterlage 5 angesaugt wird. Anhand von Fig. 2 werden Weiterbildungen des in Fig. 1 dargestellten Ausführungsbeispiels erläutert. Bei der in Fig. 3 gezeigten Vorrichtung 1 sind zusätzliche Einrichtungen zur Durchführung einer Oberflächen- und/oder Volumenanalyse vor oder während des Materialabtrags, sowie für einen lokalen Materialabtrag vorgesehen.

Der lokale Materialabtrag wird dabei insbesondere lokal an erfaßten Oberflächenfehlern durchgeführt. Für diese Weiterbildung der Erfindung ist eine optische Analyseeinrichtung mit einer Beleuchtungsquelle 27 und einer Zeilenkamera 29 vorgesehen. Von der Zeilenkamera 29 wird ein von der Beleuchtungsquelle 27 ausgeleuchteter Oberflächenbereich 39 des Substrats 3 erfaßt. Die Beleuchtung erfolgt vorzugsweise unter streifendem Einfall. Auf diese Weise sind Oberflächenfehler, wie insbesondere Kratzer gut zu erkennen. Insbesondere ist die Zeilenkamera so angeordnet, daß deren Vielzahl von lichterfassenden Pixeln jeweils von unterschiedlichen Substratbereichen stammendes Licht nachweisen, wobei die Beleuchtungsquelle oder Beleuchtungseinrichtung 27 eine Vielzahl von Lichtquellpunkten aufweist, die so angeordnet sind, daß auf jeden der erfaßten Substratbereiche innerhalb des Bereichs 39 Licht aus zumindest zwei unterschiedlichen Einfallsrichtungen fällt. Auf diese Weise ist es möglich, Kratzer unabhängig von deren Verlauf entlang der Oberfläche zu erfassen. Geeignete Vorrichtungen zur optischen Analyse der Oberfläche oder des Volumens sind insbesondere in der deutschen Anmeldung mit der Anmeldenummer 10 2005 007715.3-52 beschrieben, deren Offenbarung diesbezüglich vollumfänglich auch zum Gegenstand der vorliegenden Erfindung gemacht wird.

Da das Substrat 3 während der Nachbearbeitung entlang der Richtung 15 parallel zur Längskante 37 verschoben wird, und damit die gesamte Seite 31 den momentan erfaßten Oberflächenbereich durchläuft, wird die gesamte nachzubehalndelnde Oberfläche nach und nach erfaßt. Die Erfassung kann nicht nur den Nachweis von Kratzern oder Pits in der Oberfläche enthalten, vielmehr können auch spektroskopische Daten, die Aufschluß über die Oberflächenzusammensetzung geben, erfaßt werden. Gedacht ist hier insbesondere an eine spektroskopische Bestimmung von Verunreinigungen. Diese können beispielsweise Zinn-haltige Verunreinigungen, wie insbesondere Zinnoxid umfassen. Derartige Zinn-haltige Verunreinigungen entstehen insbesondere durch das Zinnbad bei der Floatglas-Herstellung. Weiterhin kann mit der Einrichtung auch eine Welligkeit des Flachglas-Substrats 3 erfaßt und durch lokalen Materialabtrag zumindest teilweise ausgeglichen werden.

Mittels der Daten der Oberflächen- und/oder Volumenanalyse der Einrichtung wird der Abtragsprozeß dann entsprechend gesteuert. Dazu ist bei dem in Fig. 3 gezeigten Beispiel eine zusätzliche Poliereinrichtung 40 für eine lokalen Materialabtrag der Analyseeinrichtung nachgeschaltet. Das Polierwerkzeug 9 dieser Einrichtung 40 kann quer zur Vorschubrichtung 15 verschoben und positioniert werden. Die Daten der optischen Analyseeinrichtung werden dann verwendet, um das Polierwerkzeug. 9 auf Stellen zu positionieren, an welchen ein erhöhter Materialabtrag von Vorteil ist. Beispielsweise können dann lokal Kratzer oder Wellen auspoliert werden. Auch lokal variierende Zinnoxid-Verunreinigungen können dann durch lokales Polieren mit der Poliereinrichtung 40 ausgeglichen werden, bevor mit der Polierbank 19 dann ein im wesentlichen gleichmäßiger Materialabtrag durchgeführt wird.

Gemäß einer Variante dieser Ausführungsform der Erfindung können alternativ oder zusätzlich auch die Werkzeuge 9 der Polierbank 19 entsprechend angesteuert werden, um einen lokal variierenden Materialabtrag zu erhalten. Beispielsweise kann der Anpressdruck der Poliertellern 11 oder deren Geschwindigkeit variiert werden.

Gemäß noch einer Weiterbildung der Erfindung ist eine Temperaturerfassungseinrichtung 26 vorgesehen, mit welcher die Temperatur des Flachglas-Substrates 3 gemessen wird. Mittels eines nachgeschalteten Strahlers 28 oder einer anderen Einrichtung zur Erwärmung des Flachglas-Substrats 3 kann die Temperatur des Flachglas-Substrats zumindest entlang des Abtragsbereichs auf höchstens ±5°C, bevorzugt ±2,5°C, besonders bevorzugt höchstens ±1,5°C eingestellt und stabilisiert werden.

In Fig. 3 ist eine weitere Anordnung zum Polieren von Flachglas-Substraten 3 dargestellt. Anders als bei den Anordnungen der Fig. 1 und 2 liegt hier das Substrat 3 nicht flach auf einer Auflage auf, sondern wird vielmehr während des Materialabtrags gebogen.

Dazu wird das Substrat 3 über Walzen 42, 44 geführt, wobei die Walze 42 gegenüber den Poliertellern 11 der Polierbank 19 angeordnet ist und als Widerlager für den von den Polierwerkzeugen 9 ausgeübten Druck dient. Durch den Versatz der Walzen 42, 44 wird das dünne Substrat 3 so gebogen, daß es sich zu den Polierwerkzeugen 9 hin wölbt.

Die in Fig. 4 dargestellte Anordnung eignet sich besonders gut für die kontinuierliche Nachbehandlung eines Glasbandes aus einem kontinuierlichen Glasherstellungsprozeß. Beispielsweise kann eine derartige Anordnung hinter einer Floatglas-Wanne oder einer Overflow-Downdraw-Vorrichtung aufgebaut werden, wobei das Glasband bereits vor der Zerteilung nachbehandelt wird.

Fig. 4 zeigt das Substrat in einer Zwischen-Fertigungsstufe bei der Herstellung von Flachbildschirmen, insbesondere von TFT-Schirmen. Zur Herstellung der TFT-Schirme werden auf mehrere Bereiche auf einem erfindungsgemäß nachbehandelten Flachglas-Substrat mit einer Größe von zumindest 1,8 m mal 2 m Schaltungen 60, 61, 62 der Flachbildschirme hergestellt. Die Schaltungen 60, 61, 62 weisen bei dem in Fig. 4 dargestellten Beispiel unterschiedliche Größen auf. Beispielsweise können auf diese Weise gleichzeitig Schaltungen für verschiedene Arten von Flachbildschirmen, etwa für Computermonitore, Fernsehmonitore und Mobiltelefone gleichzeitig auf dem Substrat 3 hergestellt werden. Das Herstellen der Schaltungen 60, 61, 62 geschieht mittels dem Fachmann bekannter photolithographischer Verfahren. Später werden die Schaltungen durch Durchtrennen des Flachglas-Substrats voneinander separiert. Insbesondere kann das Separieren für die Herstellung von Flüssigkristall-Anzeigen auch erst nach dem Aufbringen eines weiteren Substrats für den Einschluss der Flüssigkristalle erfolgen. Auf diese Weise werden vor der Trennung fertige Flachbildschirme hergestellt.

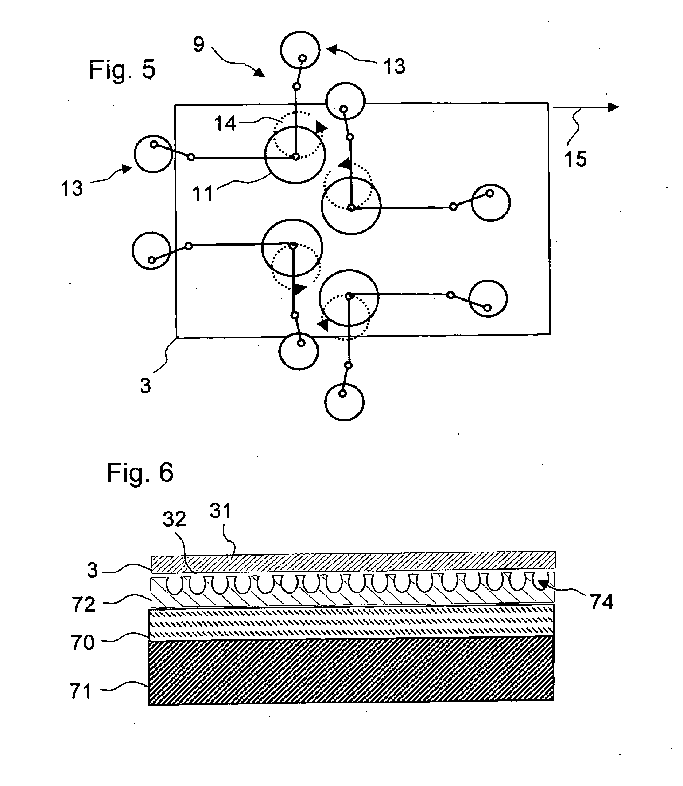

Fig. 5 zeigt in Aufsicht noch ein weiteres Beispiel einer erfindungsgemäßen Vorrichtung. Bei diesem Ausführungsbeispiel wird das Flachglas-Substrat 3 mit mehreren nebeneinander angeordneten, insbesondere unabhängig voneinander einstellbaren oszillierenden Werkzeugen poliert. Die oszillierende Bewegung erfolgt dabei in einer oder zwei Richtungen entlang der Oberfläche des zu polierenden Flachglas-Substrats 3.

Auch bei dieser Vorrichtung werden mehrere nebeneinander quer zur Vorschubrichtung 15 angeordnete Polierwerkzeuge 9 eingesetzt. In Fig. 5 sind beispielhaft vier solcher Werkzeugköpfe 9 dargestellt.

Im Unterschied zu den in Fig. 1, 2 und 3 beispielhaft gezeigten rotierenden Werkzeugen werden bei dem in Fig. 5 gezeigten Beispiel jedoch Oscar-Type-Werkzeuge eingesetzt. Diese umfassen ebenfalls jeweils einen Polierteller 11, welcher rotieren kann, jedoch nicht muss, und hier vermittels zweier um 90° versetzt wirkender Exzenter 13 entlang einer umlaufenden Bahn 14 über die Oberfläche des Substrats 3 geführt werden.

Insbesondere sind die Oscar-Type-Werkzeuge auch individuell einstellbar um die Gleichmäßigkeit der Politur verbessern zu können. Beispielsweise können Die Werkzeuge können dabei unter anderem vorteilhaft jeweils bezüglich wenigstens eines der Parameter Anpressdruck, Drehzahl, Amplitude der Oszillation und Temperatur einstellbar sein. Auch Phase, Auslenkung und Geschwindigkeit der Exzenter, sowie der Ort des jeweiligen Werkzeugs in Richtung quer zur Vorschubrichtung 15, aber auch die Schlickeraufbringung können mit Vorteil einstellbar ausgestaltet sein. Durch die Einstellung der Auslenkung der Exzenter und des Orts der Werkzeuge ist beispielsweise der Überlapp der jeweils von den einzelnen Polierwerkzeugen 9 nachbehandelte Oberflächenbereiche einstellbar. Über die Phase und Geschwindigkeit der Exzenter ist außerdem die Form der umlaufenden Bahn 14 einstellbar. So sind neben der dargestellten kreisförmigen Bewegung auch unter anderem ellipsenförmige oder achtförmige Bewegungen möglich. Durch eine Regelung des Drucks oder der Temperatur können die Werkzeuge individuell an das Schleifergebnis angepaßt werden. Durch die individuelle Einstellbarkeit wird auch eine Erweiterung der Anlage für noch größere Substrate erleichtert, da die Werkzeuge nicht hinsichtlich der Polierparameter miteinander gekoppelt sein müssen.

Fig. 6 zeigt eine Ausführungsform einer Auflage für das Flachglas-Substrat, wie sie alternativ auch für die Ausführungbeispiele der Fig. 1 und 2 einsetzbar ist. Die Auflage umfasst eine Glaskeramik-Platte 70, auf welcher eine Elastomer-Matte 72 angeordnet ist.

Die Elastomer-Matte dient nicht nur dazu, das Verkratzen der auf die Auflage gelegten Seite 32 des Substrats 3 zu vermeiden, sondern bildet außerdem einen sich am Substrat 3 festsaugenden Teil der Auflage. Dazu weist die Matte 72 außerdem Poren 74 auf, welche zur Oberfläche der Matte geöffnet und ansonsten geschlossen sind. Durch das Elastomer-Material der Matte sind die Poren verformbar und können sich dadurch wie Saugnäpfe an einer Seite 32 eines daraufgelegten Flachglas-Substrats 3 festsaugen. Auf diese Weise können die Kräften, welche durch die Nachbehandlung entlang der Oberfläche auf das Substrat einwirken, besser auf die Auflage abgegeben werden. Die Glaskeramik-Platte stellt außerdem eine stabile und wasserresistente Unterlage dar, welche insbesondere auch unempfindlich gegen Temperaturschwankungen ist.

Bei dem in Fig. 6 gezeigten Beispiel ist die Glaskeramik-Platte 70 außerdem auf einer weiteren Unterlage 71 aus einem anderen Material befestigt. Dies ist vorteilhaft, da auf diese Weise die für die Formstabilität ansonsten erfoderliche Dicke der Glaskeramik-Platte 70 und damit die Herstellungskosten der Auflage reduziert werden können.

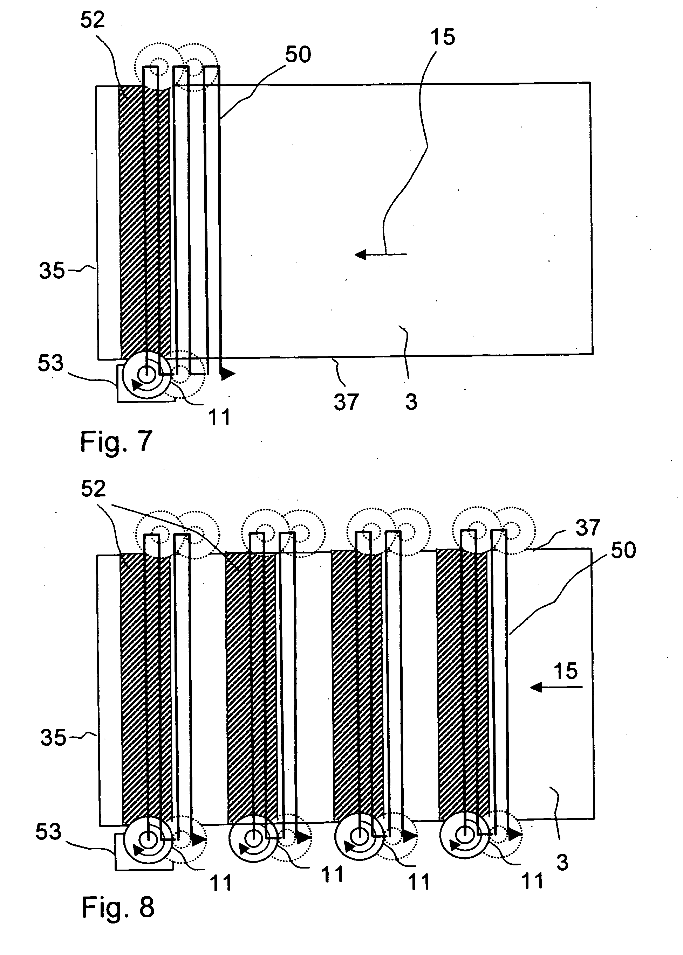

Fig. 7 zeigt eine weitere, besonders bevorzugte Anordnung zum Polieren von Flachglas als Substrat für TFT-Displays. Bei dieser Anordnung wird das Substrat 3 mit einem Abtragswerkzeug in Form eines rotierenden Poliertellers 11 in parallelen geradlinigen, zur Vorschubrichtung 15 senkrechten Bahnen über die gesamte Breite überfahren. Eine Bahn 52 ist in Fig. 7 als schraffierter Bereich dargestellt. Dabei wird der Polierteller 11 entlang eines mäanderförmigen Weges 50 über das Substrat 3 bewegt. Um dies zu erreichen, wird intermittierend der Polierteller 11 über das Substrat 3 gefahren und dann das Substrat entlang der Vorschubrichtung 15 weiterbewegt. Der Polierteller 11 ist an weiteren Positionen des mäanderförmigen Weges 50 durch gestrichelte Linien dargestellt.

Wie anhand von Fig. 7 ersichtlich ist, wird die Bewegung des Poliertellers so durchgeführt, daß die Bahnen 52 überlappen. Diese Überlappung ist insbesondere so, daß jeder Oberflächenbereich mehrmals vom Polierwerkzeug überfahren wird. Um dies zu erreichen, überlappen die Bahnen 52 um zumindest die Hälfte ihrer Breite.

Wie außerdem anhand von Fig. 7 zu erkennen ist, wird der Polierteller über den Rand 37 des Substrats 3 hinaus bewegt, wobei sogar die Rotationsachse des Poliertellers über den Rand 37 hinaus bewegt wird. Damit wird erreicht, daß auch am Rand ein gleichmäßiger Abtrag erzielt wird. Beim Überfahren des Randes wird außerdem der Anpressdruck des Poliertellers entsprechend angepasst, um im Randbereich einen gleichmäßigen Abtrag zu erreichen. Der Anpressdruck wird insbesondere so angepasst, daß der Flächendruck des Polertellers im wesentlichen konstant bleibt. Um dies zu erreichen, kann der Anpressdruck, beziehungsweise die auf den Polierteller ausgeübte Anpresskraft beim Überfahren so reduziert werden, daß das Verhältnis der momentanen Anpresskraft zur Anpresskraft, wie sie bei vollflächigem Aufliegen des Tellers 11 abseits des Randes des Substrats ausgeübt wird, im wesentlichen dem Flächenverhältnis der momentan berührten Substratfläche zur gesamten Abtragsfläche des Poliertellers entspricht.

Fig. 8 zeigt eine Weiterbildung der in Fig. 7 gezeigten Anordnung. Bei dem in Fig. 8 gezeigten Beispiel werden mehrere Polierteller 11 parallel in Bahnen 52 senkrecht zur Vorschubrichtung über das Substrat 3 bewegt. Auch hier wird eine Überlappung der Bahnen 52 durch mehrmaliges Überfahren mit den Poliertellern 11 der Abtragswerkzeuge erreicht. Die parallel, beziehungsweise gleichzeitig von den verschiedenen Polierköpfen eingefügten Bahnen überlappen dagegen aufgrund der Beabstandung der Polierteller 9 entlang der Seite 37 nicht. Auch eine solche Anordnung ist aber möglich, wobei Polierköpfe eingesetzt werden können, die bezogen auf die Längsrichtung der Bahnen 52 schräg hintereinander angeordnet sind. Bei einer solchen Anordnung werden dann die Polierteller vollständig über den Rand des Substrat 3. hinaus bewegt.

Um die Prozessnebenzeiten bei den anhand der Fg. 7 und 8 erläuterten Verfahren besser zu nutzen, kann eine Konditioniereinrichtung 53 vorgesehen sein, die neben dem Substrat 3 angeordnet ist. Diese Konditioniereinrichtung 53 konditioniert die Bereiche des Poliertellers 11 des Abtragswerkzeugs, welche über den Rand des Substrats 3 hinaus bewegt sind. Insbesondere kann eine solche Konditionierung dann in einfacher Weise vorgenommen werden, wenn der Polierteller 11 vollständig über den Rand des Substrats 3 hinaus bewegt wird und damit keinen Kontakt mit dem Substrat 3 mehr hat.

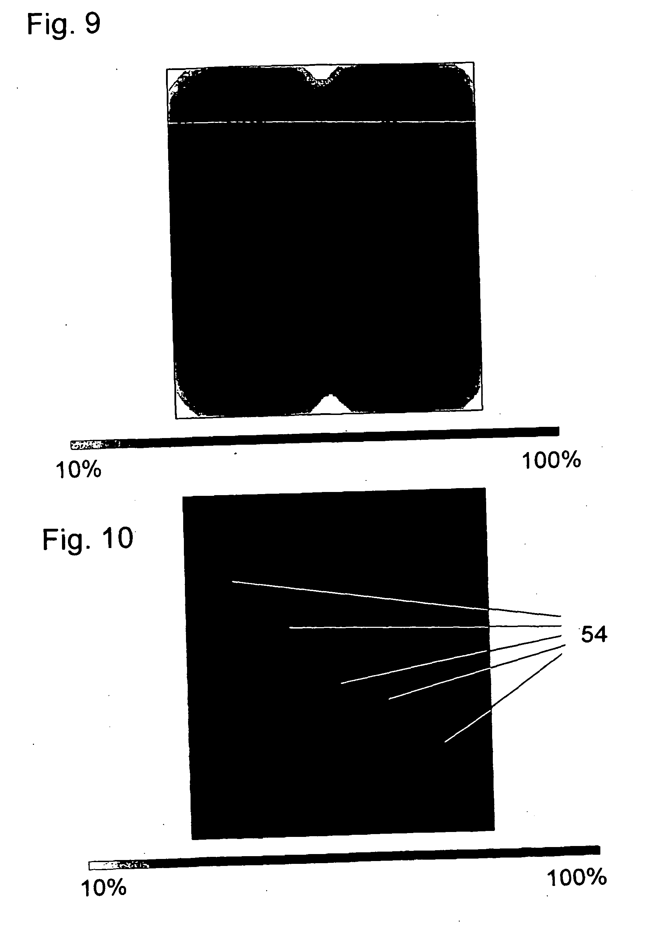

In den Fig. 9 und 10 sind Simulationen des Materialabtrags auf dem Substrat für zwei verschiedene Abtragsmethoden dargestellt. Dabei zeigt Fig. 9 eine Simulation des Abtrags mit einer Anordnung aus zwei Oscar-Type-Polierköpfen. Fig. 10 ist eine Simulation des Abtrags mittels einer Anordnung, wie sie beispielhaft in den Fig. 7 oder 8 dargestellt ist. Je dunkler der Farbwert auf den dargestellten Flächen ist, desto größer ist der Materialabtrag. Die Farbwerte sind jeweils skaliert auf Werte zwischen 10 und 100% des maximal erreichten Abtrags. Wie anhand von Fig. 9 zu erkennen ist, ergibt sich bei einem Oscar-Type-Bewegungsmechanismus der Polierköpfe, wie er beispielsweise anhand von Fig. 5 beschrieben wurde, ein nicht ganz gleichmäßiger Abtrag.

Demgegenüber zeigt die Simulation bei einer Anordnung, wie sie anhand von Fig. 7 oder 8 beschrieben wurde und bei welcher der oder die Polierköpfe das Substrat in parallelen, überlappenden Bahnen überfahren, einen wesentlich gleichmäßigere Abtrag, was anhand der nahezu gleichförmigen Färbung der Fläche zu erkennen ist. Es verbleiben lediglich geringe Ungleichmäßigkeiten an den Rändern der Bahnen. Diese sind in Fig. 9 anhand von senkrecht verlaufenden etwas helleren Streifen 54 zu erkennen. Um auch diese Ungleichmäßigkeiten zu beseitigen, wird gemäß einer Weiterbildung der Erfindung auf die geradlinige Bewegung des oder der Polierköpfe 9 eine zusätzliche Oszillation aufgeprägt, die eine Komponente senkrecht zur Bahnrichtung aufweist. Da die Streifen 54 nur vergleichsweise schmal sind, reicht eine Oszillation mit einer solchen Amplitude aus, die kleiner als ein Drittel der Breite der Bahn, beziehungsweise des Durchmessers des Poliertellers, vorzugsweise auch weniger, als ein Viertel des Durchmessers des Poliertellers, beziehungsweise der Bahnbreite ist.

Um einen gleichmäßig über die Abtragsfläche des Poliertellers verteilten Anpressdruck zu erreichen, ist es von Vorteil, wenn das Abtragswerkzeug, beziehungsweise im Speziellen der Polierteller kardanisch aufgehängt ist, so daß er um zwei zueinander senkrechte Achsen, die parallel zur Substatoberfläche liegen, frei schwenken kann, während er auf der Glasfläche vollflächig arbeitet und/oder während die Rotationsachse des Werkzeugs über der Substratoberfläche liegt.

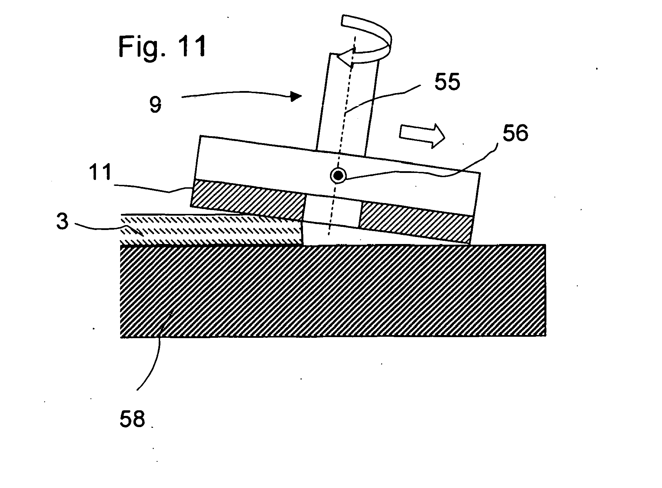

Beim Überfahren des Randes des Substrats 3 ergibt sich dabei aber das Problem, daß der Polierteller dann kippt und es zu einer ungleichmäßigen Verteilung des Anpressdrucks, im Speziellen zu einem höheren Anpressdruck direkt am Rand und einem geringeren Anpressdruck weiter vom Rand entfernt, oder sogar einem Verlust des Kontakts zum Substrat kommt. Diese Situation ist in Fig. 11 dargestellt. Spätestens dann, wenn sich die Rotationsachse 55 des Polierkopfs 9 über den Rand des auf einer Auflage 58 gelagerten Substrats 3 hinaus bewegt wird, beginnt der bei diesem Beispiel um eine Schwenkachse 56 einer kardanischen Aufhängung schwenkbar gelagerte Polierkopf um diese Achse 56 so zu kippen, daß zunächst im wesentlichen der gesamte Anpressdruck auf die Kante des Substrats 3 konzentriert wird und der Polierteller 11 zu sonstigen Bereichen keinen Kontakt mehr hat. Um aber bis zum Rand des Substrats hin einen gleichmäßigen Abtrag zu ermöglichen, ist gemäß einer Weiterbildung vorgesehen, die Schwenkachse beim Überfahren des Randes des Substrats vor einem Kippen des Polierkopfes 9 zu arretieren. In weiter innenliegenden Bereichen wird diese Arretierung gelöst, um die Vorteile der kardanischen Aufhängung zu nutzen. Werden Ecken des Substrats überfahren, können dann insbesondere auch beide Schwenkachsen arretiert werden.

### Bezugszeichenliste

- 1: Vorrichtung zur Nachbehandlung von Glassubstraten,
- 3: Flachglas-Substrat
- 5: Auflage für 3
- 7: Kanäle
- 9: Polierwerkzeug
- 11: Polierteller
- 13: Exzenter
- 14: Bahn von 9
- 15: Vorschubrichtung für 3
- 17: Vorschubrichtung für 9
- 19: Polierbank
- 20: Halterung für 9
- 26: Temperaturerfassungseinrichtung
- 27: Beleuchtungsquelle
- 28: Strahler
- 29: Zeilenkamera
- 31, 32: Seite von 3
- 35, 37: Kanten von 3
- 40: Poliereinrichtung zum lokalen Materialabtrag
- 42, 44: Walzen
- 50: mäanderförmiger Weg von 9 über 3
- 52: Polierbahn
- 54: Streifen
- 55: Rotationsachse
- 56: Schwenkachse
- 60, 61, 62: Halbleiter-Schaltungen für TFT-Anzeigen
- 70: Glaskeramik-Auflage
- 71: Unterlage
- 72: Matte
- 74: Pore

## Patentansprüche

**1.** Verfahren zur Nachbehandlung von Flachglas-Substraten, insbesondere von Flachglas-Substraten für die Flachbildschirm-Fertigung, wobei das Substrat eine Fläche von zumindest 3,2 m², vorzugsweise eine Fläche von zumindest 3,6 m² , eine Breite von zumindest 1,7, vorzugsweise zumindest 1,8 m und eine Länge von zumindest 1,9, vorzugsweise zumindest 2 Metern aufweist, **dadurch gekennzeichnet, dass** das Substrat auf einer Fläche von zumindest 3,2 m², vorzugsweise einer Fläche von zumindest 3,6 m² mit einer Breite von zumindest 1,7, vorzugsweise zumindest 1,8 m und einer Länge von zumindest 1,9, vorzugsweise zumindest 2 Metern durch Materialabtrag von wenigstens einer Seite durch Polieren nachbehandelt wird, wobei das Flachglas-Substrat mit einer Welligkeit von höchstens 200 Nanometern nachbehandelt wird, und wobei durch die Nachbehandlung Material mit einer Dicke von im Mittel höchstens 20 Mikrometern vom Substrat abgetragen und damit die Welligkeit des Flachglas-Substrats auf der nachbehandelten Seite auf kleiner 100 Nanometern reduziert wird.

**2.** Verfahren gemäß Anspruch,
**dadurch gekennzeichnet, daß** das Substrat mit zumindest eine Abtragswerkzeug in parallelen geradlinigen Bahnen über die gesamte Länge oder Breite des Substrats überfahren wird, wobei die Bahnen überlappen.

**3.** Verfahren gemäß dem vorstehenden Anspruch, **dadurch gekennzeichnet, daß** die Bahnen um mehr als die Hälfte ihrer Breite überlappen.

**4.** Verfahren gemäß einem der beiden vorstehenden Ansprüche, **dadurch gekennzeichnet, daß** das Substrat mit mehreren Abtragswerkzeugen, die das Substrat in parallelen Bahnen überfahren, gleichzeitig behandelt wird.

**5.** Verfahren gemäß einem der drei vorstehenden Ansprüche, **dadurch gekennzeichnet, daß** das Abtragswerkzeug entlang eines mäanderförmigen Weges über das Substrat bewegt wird.

**6.** Verfahren gemäß einem der beiden vorstehenden Ansprüche, **dadurch gekennzeichnet, daß** eine oszillierende Bewegung mit einer Komponente quer zur Bahn auf das Abtragswerkzeug aufgeprägt wird, wobei die Amplitude kleiner als die Breite der Bahn des ohne oszillierende Bewegung über das Substrat bewegten Abtragswerkzeugs, besonders bevorzugt kleiner als ein Drittel der Breite der Bahn bleibt.

**7.** Verfahren gemäß einem der drei vorstehenden Ansprüche, **dadurch gekennzeichnet, dass** das Substrat gegenüber wenigstens einem Abtragswerkzeug, insbesondere einem Polierkopf parallel entlang einer Vorschubrichtung bewegt wird, wobei das Abtragswerkzeug zeilenförmig quer zur Vorschubrichtung über das Substrat hinweg bewegt wird.

**8.** Verfahren gemäß einem der Ansprüche 2 bis 7, **dadurch gekennzeichnet, daß** das Abtragswerkzeug rotiert und beim Überfahren des Substrats bis zumindest der Rotationsachse über den Rand des Substrats hinaus bewegt wird.

**9.** Verfahren gemäß einem der Ansprüche 2 bis 8, **dadurch gekennzeichnet, daß** ein Abtragswerkzeug eingesetzt wird, das frei schwenkbar um zumindest eine Achse, insbesondere um eine Achse parallel zur Substratoberfläche gelagert ist.

**10.** Verfahren gemäß einem der beiden vorstehenden Ansprüche, **dadurch gekennzeichnet, daß** mindestens eine Schwenkachse beim Überfahren des Randes des Substrats arretiert wird.

**11.** Verfahren gemäß einem der drei vorstehenden Ansprüche, **dadurch gekennzeichnet, daß** mittels einer Steuereinrichtung zumindest ein Abtragsparameter des Werkzeugs, insbesondere der Anpressdruck während des Überfahrens des Randes angepasst wird.

**12.** Verfahren gemäß einem der Ansprüche 2 bis 11, **dadurch gekennzeichnet, daß** ein Substrat mit einer Feinwelligkeit nachbehandelt wird, wobei die Bahnen quer zur Vorzugsrichtung der Längsrichtung der Feinwellen laufen, vorzugsweise in einem Winkel von zumindest 60° zur Vorzugsrichtung der Längsrichtung der Feinwellen.

**13.** Verfahren gemäß einem der vorstehenden Ansprüche, **dadurch gekennzeichnet, dass** ein Flachglas-Substrat mit einer Dicke von höchstens 1,2 mm, bevorzugt höchstens 0,8 mm, insbesondere höchstens 0,7 mm nachbehandelt wird.

**14.** Verfahren gemäß einem der vorstehenden Ansprüche, **dadurch gekennzeichnet, dass** durch die Nachbehandlung zumindest Material mit einer Dicke von 0.5 Mikrometern, bevorzugt 1 Mikrometern, besonders bevorzugt 2 Mikrometern vom Substrat abgetragen wird.

**15.** Verfahren gemäß einem der vorstehenden Ansprüche, **dadurch gekennzeichnet, dass** das Flachglas-Substrat während des Materialabtrags gebogen wird.

**16.** Verfahren gemäß einem der vorstehenden Ansprüche, **dadurch gekennzeichnet, daß** vor oder während des Materialabtrags eine Oberflächen- und/oder Volumenanalyse des Substrats durchgeführt wird.

**17.** Verfahren gemäß einem der vorstehenden Ansprüche, **dadurch gekennzeichnet, daß** ein zusätzlicher lokaler Materialabtrag in Abhängigkeit einer Oberflächen- und/oder Volumenanalyse, insbesondere lokal an erfaßten Oberflächenfehlern durchgeführt wird.

**18.** Verfahren gemäß Anspruch 17, **dadurch gekennzeichnet, dass** eine Welligkeit des Flachglas-Substrats erfasst und durch lokalen Materialabtrag zumindest teilweise ausgeglichen wird.

**19.** Verfahren gemäß einem der vorstehenden Ansprüche, **dadurch gekennzeichnet, daß** das Flachglas-Substrat mit mehreren nebeneinander angeordneten, insbesondere unabhängig voneinander einstellbaren oszillierenden Werkzeugen poliert wird.

**20.** Verfahren gemäß Anspruch 19, **dadurch gekennzeichnet, daß** die Werkzeuge jeweils bezüglich wenigstens eines der Parameter Anpressdruck, Drehzahl, Amplitude der Oszillation und Temperatur eingestellt werden.

**21.** Verfahren gemäß Anspruch 19 oder 20, **dadurch gekennzeichnet, daß** die oszillierende Bewegung in einer oder zwei Richtungen entlang der Oberfläche des zu polierenden Flachglas-Substrats erfolgt.

**22.** Verfahren gemäß einem der vorstehenden Ansprüche, **dadurch gekennzeichnet, dass** ein Glasband aus einem Glasherstellungsprozess kontinuierlich nachbehandelt wird.

**23.** Verfahren gemäß einem der vorstehenden Ansprüche, **dadurch gekennzeichnet, dass** das Flachglas-Substrat während der Nachbehandlung auf einer Auflage mit einer Glaskeramik-Platte gelagert wird.

**24.** Verfahren gemäß Anspruch 23, **dadurch gekennzeichnet, dass** das Flachglas-Substrat während der Nachbehandlung auf einer Auflage mit einer Glaskeramik-Platte gelagert wird welche auf einer weiteren Unterlage befestigt ist.

**25.** Verfahren gemäß einem der vorstehenden Ansprüche, **dadurch gekennzeichnet, dass** das Flachglas-Substrat während der Nachbehandlung auf einer Auflage festgesaugt wird.

**26.** Verfahren gemäß Anspruch 25, **dadurch gekennzeichnet, daß** das Flachglas-Substrat durch einen an in der Auflage vorhandene Kanäle angelegten Unterdruck festgesaugt wird.

**27.** Verfahren gemäß Anspruch 25 oder 26, **dadurch gekennzeichnet, daß** das Flachglas-Substrat auf einer porösen Auflage festgesaugt wird, an welche ein Unterdruck angelegt wird.

**28.** Verfahren gemäß einem der vorstehenden Ansprüche, **dadurch gekennzeichnet, dass** die Temperatur des Flachglas-Substrats während des Abtrags geregelt wird.

**29.** Verfahren gemäß einem der vorstehenden Ansprüche, **dadurch gekennzeichnet, dass** die Temperatur des Flachglas-Substrats zumindest entlang des Abtragsbereichs auf höchstens ±5 °C, bevorzugt ±2,5 °C, besonders bevorzugt höchstens ±1,5 °C eingestellt wird.

**30.** Verfahren gemäß einem der vorstehenden Ansprüche, **dadurch gekennzeichnet, dass** das Substrat in mehreren aufeinander aufbauenden materialabtragenden Schritten behandelt wird.

**31.** Verfahren gemäß einem der vorstehenden Ansprüche, **dadurch gekennzeichnet, dass** das Substrat gleichzeitig in mehreren aufeinander aufbauenden materialabtragenden Schritten behandelt wird.

**32.** Verfahren gemäß einem der vorstehenden Ansprüche, **dadurch gekennzeichnet, dass** die Geschwindigkeit und/oder Druck des oder der Abtragwerkzeuge insbesondere in Abhängigkeit der Substrattemperatur geregelt wird.

**33.** Verfahren gemäß einem der vorstehenden Ansprüche, **dadurch gekennzeichnet, dass** durch den Materialabtrag Verunreinigungen, insbesondere zinnhaltige Verunreinigungen von der Oberfläche des Flachglas-Substrats entfernt werden.

**34.** Verfahren gemäß einem der vorstehenden Ansprüche, **dadurch gekennzeichnet, dass** ein Floatglas-Substrat nachbehandelt wird.

**35.** Verfahren gemäß einem der vorstehenden Ansprüche, **dadurch gekennzeichnet, dass** die Substratoberfläche während und bis zu einer nach dem Materialabtrag erfolgenden Reinigung feucht gehalten wird.

**26.** Verfahren gemäß einem der vorstehenden Ansprüche, bei dem die einzelne Glassubstrate direkt nacheinander in einem durchlaufenden Abtragsprozeß bearbeitet werden.

**37.** Verfahren gemäß einem der vorstehenden Ansprüche, **dadurch gekennzeichnet, daß** einer kontinuierlichen Bewegung eines Werkzeuges eine stochastische Bewegung überlagert wird.

**38.** Verfahren gemäß einem der vorstehenden Ansprüche, **dadurch gekennzeichnet, daß** das Abtragswerkzeug in Nebenzeiten konditioniert wird.

## Claims

**1.** Method for the after-treatment of flat glass substrates, in particular flat glass substrates for the manufacture of flat screens, wherein the substrate has an area of at least 3.2 m², preferably an area of at least 3.6 m², a width of at least 1.7, preferably at least 1.8 m and a length of at least 1.9, preferably at least 2 metres, **characterised in that** the substrate is after-treated on an area of at least 3.2 m², preferably an area of at least 3.6 m² with a width of at least 1.7, preferably at least 1.8 m and a length of at least 1.9, preferably at least 2 metres by means of material removal from at least one side by polishing, wherein the flat glass substrate is after-treated with a corrugation of at most 200 nanometres, and wherein by virtue of the after-treatment material having a thickness on average of at most 20 micrometres is removed from the substrate and the corrugation of the flat glass substrate on the after-treated side is therefore reduced to less than 100 nanometres.

**2.** Method as claimed in claim 1, **characterised in that** the substrate is traversed by at least one removal tool in parallel linear paths over the entire length or width of the substrate, wherein the paths overlap.

**3.** Method as claimed in the preceding claim, **characterised in that** the paths overlap by more than half their width.

**4.** Method as claimed in any one of the two preceding claims, **characterised in that** the substrate is treated simultaneously by several removal tools which traverse the substrate in parallel paths.

**5.** Method as claimed in any one of the three preceding claims, **characterised in that** the removal tool is moved along a meandering path over the substrate.

**6.** Method as claimed in any one of the two preceding claims, **characterised in that** an oscillating movement with one component transverse to the path is imposed upon the removal tool, wherein the amplitude is less than the width of the path of the removal tool moved without any oscillating movement over the substrate, and in a particularly preferred manner remains less than a third of the width of the path.

**7.** Method as claimed in any one of the three preceding claims, **characterised in that** with respect to at least one removal tool, in particular a polishing head, the substrate is moved in parallel in an advancing direction, wherein the removal tool is moved over the substrate in a linear manner transverse to the advancing direction.

**8.** Method as claimed in any one of claims 2 to 7, **characterised in that** the removal tool rotates and, while traversing the substrate, is moved as far as at least the axis of rotation beyond the edge of the substrate.

**9.** Method as claimed in any one of claims 2 to 8, **characterised in that** a removal tool is used which is mounted so as to be able to pivot freely about at least one axis, in particular about an axis in parallel with the substrate surface.

**10.** Method as claimed in any one of the two preceding claims, **characterised in that** at least one pivot axis is blocked when the edge of the substrate is traversed.

**11.** Method as claimed in any one of the three preceding claims, **characterised in that** by means of a control device at least one removal parameter of the tool, in particular the contact pressure, is adapted as the edge is being traversed.

**12.** Method as claimed in any one of claims 2 to 11, **characterised in that** a substrate is after-treated with a fine corrugation, wherein the paths run transverse to the preferential direction of the longitudinal direction of the fine corrugations, preferably at an angle of at least 60° to the preferential direction of the longitudinal direction of the fine corrugations.

**13.** Method as claimed in any one of the preceding claims, **characterised in that** a flat glass substrate is after-treated with a thickness of at most 1.2 mm, preferably of at most 0.8 mm, in particular of at most 0.7 mm.

**14.** Method as claimed in any one of the preceding claims, **characterised in that** by virtue of the after-treatment, at least material having a thickness of 0.5 micrometres, preferably 1 micrometre, and particularly preferably 2 micrometres is removed from the substrate.

**15.** Method as claimed in any one of the preceding claims, **characterised in that** the flat glass substrate is curved during material removal.

**16.** Method as claimed in any one of the preceding claims, **characterised in that** prior to or during material removal a surface and/or volume analysis of the substrate is carried out.

**17.** Method as claimed in any one of the preceding claims, **characterised in that** an additional local material removal procedure is performed in dependence upon a surface and/or volume analysis, in particular locally on detected surface flaws.

**18.** Method as claimed in claim 17, **characterised in that** a corrugation of the flat glass substrate is detected and at least partially compensated for by means of local material removal.

**19.** Method as claimed in any one of the preceding claims, **characterised in that** the flat glass substrate is polished with several oscillating tools which are disposed adjacent to each other and can be adjusted in particular independently of each other.

**20.** Method as claimed in claim 19, **characterised in that** the tools are each adjusted in relation to at least one of the following parameters: contact pressure, rotational speed, amplitude of oscillation and temperature.

**21.** Method as claimed in claim 19 or 20, **characterised in that** the oscillating movement is performed in one or two directions along the surface of the flat glass substrate which is to be polished.

**22.** Method as claimed in any one of the preceding claims, **characterised in that** a glass sheet from a glass production process is after-treated in a continuous manner.

**23.** Method as claimed in any one of the preceding claims, **characterised in that** during the after-treatment the flat glass substrate is mounted on a support with a glass-ceramics plate.

**24.** Method as claimed in claim 23, **characterised in that** during the after-treatment the flat glass substrate is mounted on a support with a glass-ceramics plate which is attached to a further base.

**25.** Method as claimed in any one of the preceding claims, **characterised in that** during the after-treatment the flat glass substrate is adhered by suction to a support.

**26.** Method as claimed in claim 25, **characterised in that** the flat glass substrate is adhered by suction by means of a negative pressure applied to channels present in the support.

**27.** Method as claimed in claim 25 or 26, **characterised in that** the flat glass substrate is adhered by suction to a porous support, to which a negative pressure is applied.

**28.** Method as claimed in any one of the preceding claims, **characterised in that** the temperature of the flat glass substrate is regulated during the removal procedure.

**29.** Method as claimed in any one of the preceding claims, **characterised in that** the temperature of the flat glass substrate at least along the removal region is adjusted to at most ± 5 °C, preferably ± 2.5 °C, and particularly preferably to at most ± 1.5 °C.

**30.** Method as claimed in any one of the preceding claims, **characterised in that** the substrate is treated in several successively constitutive, material-removing steps.

**31.** Method as claimed in any one of the preceding claims, **characterised in that** the substrate is treated simultaneously in several successively constitutive, material-removing steps.

**32.** Method as claimed in any one of the preceding claims, **characterised in that** the speed and/or pressure of the removal tool(s) is regulated in particular in dependence upon the substrate temperature.

**33.** Method as claimed in any one of the preceding claims, **characterised in that** by reason of the material removal, impurities, in particular tin-containing impurities, are removed from the surface of the flat glass substrate.

**34.** Method as claimed in any one of the preceding claims, **characterised in that** a float glass substrate is after-treated.

**35.** Method as claimed in any one of the preceding claims, **characterised in that** the substrate surface is kept moist during and until a cleaning procedure which is performed after the material removal.

**26.** *sic*]. Method as claimed in any one of the preceding claims, wherein the individual glass substrates are processed directly one after the other in a continuous removal process.

**37.** Method as claimed in any one of the preceding claims, **characterised in that** a stochastic movement is superimposed upon a continuous movement of a tool.

**38.** Method as claimed in any one of the preceding claims, **characterised in that** the removal tool is conditioned in downtimes.

## Revendications

1. Procédé pour le retraitement de substrats en verre plat, en particulier de substrats en verre plat, pour la fabrication d'écrans plats, le substrat présentant une surface d'au moins 3,2 m², de préférence une surface d'au moins 3,6 m², une largeur d'au moins 1,7, de préférence au moins 1,8 m et une longueur d'au moins 1,9, de préférence au moins 2 m,
**caractérisé en ce que** le substrat est retraité sur une surface d'au moins 3,2 m², de préférence d'au moins 3,6 m² avec une largeur d'au moins 1,7, de préférence au moins 1,8 m et une longueur d'au moins 1,9, de préférence au moins 2 m, par usure de matériau sur au moins un côté par polissage, le substrat en verre plat étant retraité avec une ondulation de 200 nanomètres au maximum, et du matériau présentant une épaisseur maximum moyenne de 20 micromètres étant enlevé du substrat par le retraitement et l'ondulation du substrat en verre plat sur le côté retraité étant donc réduite à moins de 100 nanomètres.

2. Procédé selon la revendication 1, **caractérisé en ce que** le substrat est parcouru avec au moins un outil d'usure dans des bandes parallèles et rectilignes sur toute la longueur ou toute la largeur du substrat, les bandes se chevauchant.

3. Procédé selon la revendication précédente, **caractérisé en ce que** les bandes se chevauchent sur plus de la moitié de leur largeur.

4. Procédé selon l'une quelconque des deux revendications précédentes, **caractérisé en ce que** le substrat est traité simultanément avec plusieurs outils d'usure, qui passent sur le substrat dans les bandes parallèles.

5. Procédé selon l'une quelconque des trois revendications précédentes, **caractérisé en ce que** l'outil d'usure est déplacé le long d'un chemin en forme de méandre sur le substrat.

6. Procédé selon l'une quelconque des deux revendications précédentes, **caractérisé en ce qu'**un mouvement oscillant est imprimé avec un composant transversalement à la bande sur l'outil d'usure, l'amplitude restant inférieure à la largeur de la bande de l'outil d'usure déplacé sans mouvement oscillant sur le substrat, en particulier de préférence inférieure à un tiers de la largeur de la bande.

7. Procédé selon l'une quelconque des trois revendications précédentes, **caractérisé en ce que** le substrat est déplacé par rapport à au moins un outil d'usure, en particulier une tête de polissage, parallèlement le long d'une direction d'avancement, l'outil d'usure étant déplacé en forme de ligne transversalement au sens d'avancement sur le substrat.

8. Procédé selon l'une quelconque des revendications 2 à 7, **caractérisé en ce que** l'outil d'usure est tourné et est déplacé lors du franchissement du substrat jusqu'à au moins l'axe de rotation au-delà du bord du substrat.

9. Procédé selon l'une quelconque des revendications 2 à 8, **caractérisé en ce qu'**un outil d'usure est utilisé, lequel est logé de façon à pouvoir basculer librement autour d'au moins un axe, en particulier autour d'un axe parallèlement à la surface du substrat.

10. Procédé selon l'une quelconque des deux revendications précédentes, **caractérisé en ce que** au moins un axe de pivotement est bloqué lors du franchissement du bord du substrat.

11. Procédé selon l'une quelconque des trois revendications précédentes, **caractérisé en ce que** au moins un paramètre d'usure de l'outil, en particulier la pression d'appui est adaptée au moyen d'un dispositif de commande pendant le franchissement du bord.

12. Procédé selon l'une quelconque des revendications 2 à 11, **caractérisé en ce qu'**un substrat est retraité avec une ondulation fine, les bandes étant agencées transversalement à la direction préférentielle de la direction longitudinale des ondulations fines, de préférence dans un angle d'au moins 60° par rapport à la direction préférentielle de la direction longitudinale des ondulations fines.

13. Procédé selon l'une quelconque des revendications précédentes, **caractérisé en ce qu'**un substrat en verre plat présentant une épaisseur maximale de 1,2 mm, de préférence au maximum 0,8 mm, en particulier au maximum 0,7 mm est retraité.

14. Procédé selon l'une quelconque des revendications précédentes, **caractérisé en ce qu'**au moins du matériau présentant une épaisseur de 0,5 micromètre, de préférence 1 micromètre, avec une préférence particulière 2 micromètres est enlevé du substrat par le retraitement.

15. Procédé selon l'une quelconque des revendications précédentes, **caractérisé en ce que** le substrat en verre plat est plié pendant l'usure du matériau.

16. Procédé selon l'une quelconque des revendications précédentes, **caractérisé en ce qu'**une analyse de surface et/ou de volume du substrat est effectuée avant ou pendant l'usure du matériau.

17. Procédé selon l'une quelconque des revendications précédentes, **caractérisé en ce qu'**une usure de matériau locale supplémentaire est effectuée en fonction d'une analyse de surface et/ou d'une analyse de volume, en particulier localement sur des défauts de surface détectés.

18. Procédé selon la revendication 17, **caractérisé en ce qu'**une ondulation du substrat en verre plat est détectée et compensée au moins en partie par une usure de matériau locale.

19. Procédé selon l'une quelconque des revendications précédentes, **caractérisé en ce que** le substrat en verre plat est poli avec plusieurs outils oscillants, disposés les uns à côté des autres, en particulier réglables indépendamment les uns des autres.

20. Procédé selon la revendication 19, **caractérisé en ce que** les outils sont réglés à chaque fois **en ce qu'**il concerne au moins l'un des paramètres suivants : pression d'appui, régime, amplitude de l'oscillation et température.

21. Procédé selon la revendication 19 ou 20,
**caractérisé en ce que** le mouvement oscillant s'effectue dans une ou deux directions le long de la surface du substrat en verre plat à polir.

22. Procédé selon l'une quelconque des revendications précédentes, **caractérisé en ce qu'**une bande de verre provenant d'un processus de fabrication de verre est retraitée de façon continue.

23. Procédé selon l'une quelconque des revendications précédentes, **caractérisé en ce que** le substrat en verre plat est logé pendant le retraitement sur un support avec une plaque vitrocéramique.

24. Procédé selon la revendication 23, **caractérisé en ce que** le substrat en verre plat est logé pendant le retraitement sur un support avec une plaque vitrocéramique qui est fixée sur un autre support.

25. Procédé selon l'une quelconque des revendications précédentes, **caractérisé en ce que** le substrat en verre plat est aspiré fermement pendant le retraitement sur un support.

26. Procédé selon la revendication 25, **caractérisé en ce que** le substrat en verre plat est aspiré fermement par une dépression appliquée sur des canaux présents dans le support.

27. Procédé selon la revendication 25 ou 26,
**caractérisé en ce que** le substrat en verre plat est aspiré fermement sur une surface poreuse, sur laquelle une dépression est appliquée.

28. Procédé selon l'une quelconque des revendications précédentes, **caractérisé en ce que** la température du substrat en verre plat est réglée pendant l'usure.

29. Procédé selon l'une quelconque des revendications précédentes, **caractérisé en ce que** la température du substrat en verre plat est réglée au moins le long de la zone d'usure sur au maximum ± 5°C, de préférence ± 2,5 °C, avec une préférence particulière au maximum sur ± 1,5°C.

30. Procédé selon l'une quelconque des revendications précédentes, **caractérisé en ce que** le substrat est traité en plusieurs étapes d'usure de matériau superposées.

31. Procédé selon l'une quelconque des revendications précédentes, **caractérisé en ce que** le substrat est traité simultanément en plusieurs étapes d'usure de matériau superposées.

32. Procédé selon l'une quelconque des revendications précédentes, **caractérisé en ce que** la vitesse et/ou la pression de l'outil ou des outils d'usure est réglée en particulier en fonction de la température du substrat.

33. Procédé selon l'une quelconque des revendications précédentes, **caractérisé en ce que** des impuretés, en particulier des impuretés contenant de l'étain sont enlevées de la surface du substrat en verre plat par l'usure du matériau.

34. Procédé selon l'une quelconque des revendications précédentes, **caractérisé en ce qu'**un substrat en verre flotté est retraité.

35. Procédé selon l'une quelconque des revendications précédentes, **caractérisé en ce que** la surface de substrat est maintenue humide pendant et jusqu'à un nettoyage effectué après l'usure de matériau.

36. Procédé selon l'une quelconque des revendications précédentes, dans lesquelles les substrats en verre individuels sont traités directement les uns après les autres dans un processus d'usure continu.

37. Procédé selon l'une quelconque des revendications précédentes, **caractérisé en ce qu'**un mouvement stochastique est superposé à un mouvement continu d'un outil.

38. Procédé selon l'une quelconque des revendications précédentes, **caractérisé en ce que** l'outil d'usure est conditionné dans des temps secondaires.
